# EUROPÄISCHE PATENTSCHRIFT

(11) **EP 3 104 503 B1**
(45) Veröffentlichungstag und Bekanntmachung des Hinweises auf die Patenterteilung: **28.03.2018**
(21) Anmeldenummer: 15001690.5
(22) Anmeldetag: 08.06.2015
(51) Int. Cl.: H02K 7/116, F16H 55/18, F16H 57/12, H02K 16/00, F16H 55/28

(54) **SPIELFREIER DREHANTRIEB**
ROTARY DRIVE WITH NO PLAY
ENTRAINEMENT ROTATIF SANS JEU

(43) Veröffentlichungstag der Anmeldung: 14.12.2016
(73) Patentinhaber: WMH Herion Antriebstechnik GmbH, 85283 Wolnzach (DE)
(72) Erfinder: Ritzer, Stephan, 86643 Rennertshofen (DE); Suchandt, Thomas, Prof. Dr., 85051 Ingolstadt (DE); Dütsch, Christoph, 92711 Parkstein (DE)
(74) Vertreter: Reichert & Lindner Partnerschaft Patentanwälte

(56) Entgegenhaltungen:
- EP-A1- 2 818 419
- EP-A2- 2 822 159
- DE-U1-202010 016 197
- US-A1- 2014 107 837

## Beschreibung

Die vorliegende Erfindung betrifft einen spielfreien Drehantrieb nach dem Oberbegriff des Anspruchs 1 sowie ein Betriebsverfahren für einen solchen spielfreien Drehantrieb und einen Zahnstangenantrieb mit einem solchen spielfreien Drehantrieb.

Ein gattungsgemäßer spielfreier Drehantrieb ist-aus der EP 2822159 A2 bekannt und enthält eine Mehrzahl von Elektromotoren, die um eine Zentralachse herum angeordnet sind und je ein Ausgangsritzel haben, das an einem zur Zentralachse koaxialen Abnahmezahnrad antriebsmäßig angreift, von dem die Antriebswirkung der Elektromotoren auf ein zum Abnahmezahnrad koaxialen Abgabezahnrad übertragen wird, an dem die Antriebswirkung des Drehantriebs abnehmbar ist. Bei n Elektromotoren kann die Spielfreiheit mit dieser Technik z.B. durch einen bezüglich allen anderen n-1 Elektromotoren gegenläufig betriebenen Elektromotor erreicht werden. Dies ermöglicht einen spielfreien Drehantrieb und damit eine spielfreie Positionierung der Ausgangsseite. Eine andere Technik zur Realisierung der Spielfreiheit besteht, wie in der EP 2822159 A2 auch offenbart ist, z.B. in der Verwendung eines spielfreien Stirnrades gemäß dem deutschen Gebrauchsmuster DE202010016197U1 als Abgabezahnrad.

Gegenüber den bekannten Techniken ist es wünschenswert die Einstellbarkeit der Verspannung und die Ausbeute der Drehmomentübertragung weiter zu verbessern, was das Ziel der vorliegenden Erfindung ist.

Dazu schafft die Erfindung einen spielfreien Drehantrieb nach dem Anspruch 1 sowie ein Betriebsverfahren für einen spielfreien Drehantrieb nach den Ansprüchen 12, 13 und 14 sowie einen Zahnstangenantrieb mit einem solchen spielfreien Drehantrieb nach dem Anspruch 15. Vorteilhafte und bevorzugte weitere Ausgestaltungen ergeben sich aus den abhängigen Ansprüchen und deren Kombinationen sowie den nachfolgenden Erläuterungen.

Entsprechend enthält ein erfindungsgemäße spielfreier Drehantrieb eine Mehrzahl von Elektromotoren, die um eine Zentralachse herum angeordnet sind und je ein Ausgangsritzel haben, das an einem zur Zentralachse koaxialen Abnahmezahnrad antriebsmäßig angreift, von dem die Antriebswirkung der Elektromotoren auf ein zum Abnahmezahnrad koaxialen Abgabezahnrad übertragen wird, an dem die Antriebswirkung des Drehantriebs abnehmbar ist, wobei ferner vorgesehen ist:
dass das Abnahmezahnrad aus einem ersten Abnahmeteilzahnrad und einem dazu axial benachbarten zweiten Abnahmeteilzahnrad gebildet ist,
dass das Abgabezahnrad aus einem ersten Abgabeteilzahnrad und einem dazu axial benachbarten zweiten Abgabeteilzahnrad gebildet ist,
dass das erste Abnahmeteilzahnrad und das erste Abgabeteilzahnrad an der Zentralachse axial beabstandet und drehfest angeordnet sind,
dass das zweite Abnahmeteilzahnrad und das zweite Abgabeteilzahnrad axial beabstandet und drehfest jeweils an einem axialen Ende einer rohrartigen Hülse angeordnet sind, die die Zentralachse zwischen dem ersten Abnahmeteilzahnrad und dem ersten Abgabeteilzahnrad zumindest um einen vorgebbaren Winkelbereich frei drehbar umgibt,
dass wenigstens das Ausgangsritzel eines Elektromotors an dem ersten Abnahmeteilzahnrad und wenigstens das Ausgangsritzel eines anderen Elektromotors an dem zweiten Abnahmeteilzahnrad antriebsmäßig angreifen, und
dass eine Steuerung für die Mehrzahl von Elektromotoren enthalten und ausgelegt ist, um jeden über sein Ausgangsritzel an dem zweiten Abnahmeteilzahnrad angreifenden Elektromotor zumindest temporär relativ zu den über ihr jeweiliges Ausgangsritzel an dem ersten Abnahmeteilzahnrad angreifenden Elektromotoren zur Aufhebung jeglichen Spiels in entgegengesetzter Drehrichtung zu betreiben.

Bevorzugt sind die Elektromotoren der Mehrzahl von Elektromotoren zu einer Baueinheit zusammengefasst, die auch eine Halterung enthält, in der die Zentralachse drehbar gelagert ist, und/oder sind die Elektromotoren der Mehrzahl von Elektromotoren gleichmäßig verteilt und/oder gleichmäßig beabstandet und/oder längs einer Kreislinie konzentrisch um die Zentralachse angeordnet. Diese Ausgestaltungen ergeben einfache sowie gut planbare und gut zu handhabende Drehantriebe.

Vorzugsweise ist ferner vorgesehen, dass bei einer geradzahlige Anzahl von Elektromotoren die Ausgangsritzel einer Hälfte der Elektromotoren an dem ersten Abnahmeteilzahnrad und die Ausgangsritzel der anderen Hälfte der Elektromotoren an dem zweiten Abnahmeteilzahnrad antriebsmäßig angreifen, und dass die Elektromotoren, deren Ausgangsritzel an dem ersten Abnahmeteilzahnrad angreifen, und die Elektromotoren, deren Ausgangsritzel an dem zweiten Abnahmeteilzahnrad angreifen in Umfangsrichtung der ersten und zweiten Abnahmeteilzahnräder abwechselnd angeordnet sind, und dass bei einer ungeradzahlige Anzahl von Elektromotoren das Ausgangsritzel eines Elektromotors beliebig an dem ersten Abnahmeteilzahnrad oder dem zweiten Abnahmeteilzahnrad antriebsmäßig angreift und die Ausgangsritzel einer Hälfte der verbleibenden Anzahl von Elektromotoren an dem ersten Abnahmeteilzahnrad und die Ausgangsritzel der anderen Hälfte der verbleibenden Anzahl von Elektromotoren an dem zweiten Abnahmeteilzahnrad antriebsmäßig angreifen, und dass die Elektromotoren, deren Ausgangsritzel an dem ersten Abnahmeteilzahnrad angreifen, und die Elektromotoren, deren Ausgangsritzel an dem zweiten Abnahmeteilzahnrad angreifen in Umfangsrichtung der ersten und zweiten Abnahmeteilzahnräder möglichst abwechselnd angeordnet sind. Jede dieser Anordnungen ermöglicht eine möglichst gute und einfache Spielaufhebung bei gleichzeitig möglichst geringer Belastung aller Elektromotoren.

Weiterhin ist es bevorzugt, wenn das erste Abnahmeteilzahnrad und das zweite Abnahmeteilzahnrad hinsichtlich Radius, Dicke, Zahnanordnung, -tiefe, -dicke und/oder -teilung zumindest annähernd identisch sind, und/oder wenn das erste Abgabeteilzahnrad und das zweite Abgabeteilzahnrad hinsichtlich Radius, Dicke, Zahnanordnung, -tiefe, -dicke und/oder -teilung zumindest annähernd identisch sind.

Eine weitere vorzugsweise Gestaltung besteht darin, dass die Elektromotoren baugleich und/oder asynchrone Elektromotoren sind.

Mit Vorzug kann ferner vorgesehen sein, dass die Ausgangsritzel und das Abnahmezahnrad ein Getriebe mit vorgebbarer Über- oder Untersetzung bilden.

Noch eine weitere bevorzugte Gestaltung besteht darin, dass für die Gesamtheit der Elektromotoren zwei Frequenzumrichter enthalten sind, die von der Steuerung zur Aufhebung jeglichen Spiels unterschiedlich angesteuert werden. Alternativ oder zusätzlich kann mit Vorzug auch vorgesehen sein, dass wenigstens ein Positions-, Winkel- oder Lagesensor enthalten ist, der mit der Steuerung zur Ist-Wert-Übertragung gekoppelt ist, und dass die Steuerung ausgelegt ist, die Elektromotoren in Abhängigkeit von wenigstens einem Ist-Wert und wenigstens einem festlegbaren oder festgelegten Soll-Wert zu steuern, um den Drehantrieb auf den Soll-Wert einzustellen.

Vorzugsweise kann außerdem die Steuerung ausgelegt sein, um auf die einzelnen Elektromotoren so einzuwirken, dass die einzelnen Elektromotoren gleichmäßig belastet werden, und/oder dass das Gesamtdrehmoment des Drehantriebs auf alle Elektromotoren synchron verteilt wird.

Bevorzugt enthält die Mehrzahl von Elektromotoren vier Elektromotoren und/oder beaufschlagen die Elektromotoren der Mehrzahl von Elektromotoren im Betrieb nach einer Anlaufphase in einer Drehrichtung das Abnahmezahnrad gemeinschaftlich.

Eine andere vorteilhafte Weiterbildung besteht darin, dass das Abnahmezahnrad und/oder die Zentralachse über Kugellager gelagert sind/ist.

Ferner kann das Abnahmezahnrad ein außenverzahntes Abnahmezahnrad sein, mit dem die Ausgangsritzel kämmen, oder kann das Abnahmezahnrad ein innenverzahntes Abnahmezahnrad in Ringform mit einer Innenverzahnung sein, mit der die Ausgangsritzel kämmen. Auch das Abgabezahnrad kann als außenverzahnte oder innenverzahnte Version zum Einsatz kommen.

Bei einer Variante des erfindungsgemäßen Betriebsverfahrens für einen spielfreien Drehantrieb ist vorgesehen, dass in einer Anlaufphase des Drehantriebs jeder über sein Ausgangsritzel an dem zweiten Abnahmeteilzahnrad angreifende Elektromotor temporär relativ zu den über ihr jeweiliges Ausgangsritzel an dem ersten Abnahmeteilzahnrad angreifenden Elektromotoren zur Aufhebung jeglichen Spiels in entgegengesetzter Drehrichtung betrieben wird, und dass nach Beendigung der Anlaufphase alle vorhandenen Elektromotoren so betrieben werden, dass sich ihre Ausgangsritzel in derselben Drehrichtung drehen.

Ein weiteres erfindungsgemäßes Betriebsverfahren für einen spielfreien Drehantrieb besteht darin, dass bei einer Drehrichtungsumkehr des Drehantriebs nach dem Anhalten aller Elektromotoren aus einem Betrieb in einer Drehrichtung in einer Anlaufphase des Drehantriebs zum Betrieb der Elektromotoren für die entgegengesetzte neue Drehrichtung jeder über sein Ausgangsritzel an dem zweiten Abnahmeteilzahnrad angreifende Elektromotor temporär relativ zu den über ihr jeweiliges Ausgangsritzel an dem ersten Abnahmeteilzahnrad angreifenden Elektromotoren zur Aufhebung jeglichen Spiels in Drehrichtung entgegengesetzt zur neuen Drehrichtung betrieben wird, und dass nach Beendigung der Anlaufphase alle vorhandenen Elektromotoren so betrieben werden, dass sich ihre Ausgangsritzel in derselben neuen Drehrichtung drehen.

Noch ein weiteres erfindungsgemäßes Betriebsverfahren für einen spielfreien Drehantrieb besteht darin, dass bei einem Anhalten oder bei einer Drehrichtungsumkehr des Drehantriebs vor dem Anhalten aller Elektromotoren aus einem Betrieb in einer Drehrichtung jeder über sein Ausgangsritzel an dem zweiten Abnahmeteilzahnrad angreifende Elektromotor temporär relativ zu den über ihr jeweiliges Ausgangsritzel an dem ersten Abnahmeteilzahnrad angreifenden Elektromotoren zur Aufhebung jeglichen Spiels in Drehrichtung entgegengesetzt zur vorherigen Drehrichtung betrieben wird.

Bei einem erfindungsgemäßen Zahnstangenantrieb mit einem oben erläuterten erfindungsgemäßen spielfreien Drehantrieb ist vorgesehen, dass das aus dem ersten Abgabeteilzahnrad und dem dazu axial benachbarten zweiten Abgabeteilzahnrad gebildete Abgabezahnrad ein Stirnrad ist, das mit einer Zahnstange kämmt.

Weitere bevorzugte und vorteilhafte Weiterbildungen der Erfindung ergeben sich auch aus der nachfolgenden Beschreibung einzelner Ausführungsbeispiele der Erfindung.

Die Erfindung wird anhand von Ausführungsbeispielen nachfolgend unter Bezugnahme auf die Zeichnung lediglich exemplarisch näher erläutert, in der
- Fig. 1: in einer schematischen perspektivischen Ansicht den Grundaufbau ein erstes Ausführungsbeispiel des spielfreien Drehantriebs veranschaulicht,
- Fig. 2: in einer schematischen perspektivischen Schnittansicht weitere Einzelheiten des Grundaufbaus des ersten Ausführungsbeispiels des spielfreien Drehantriebs aus der Fig. 1 veranschaulicht,
- Fig. 3: in einer schematischen perspektivischen Ansicht den Grundaufbau ein zweites Ausführungsbeispiel des spielfreien Drehantriebs veranschaulicht,
- Fig. 4: in einer schematischen perspektivischen Schnittansicht weitere Einzelheiten des Grundaufbaus des zweiten Ausführungsbeispiels des spielfreien Drehantriebs aus der Fig. 3 veranschaulicht, und
- Fig. 5: in einer schematischen perspektivischen Ansicht den Grundaufbau ein Ausführungsbeispiel eines Zahnstangenantriebs mit einem spielfreien Drehantrieb veranschaulicht.

Anhand der nachfolgend beschriebenen und in den Zeichnungen dargestellten Ausführungs- und Anwendungsbeispiele wird die Erfindung lediglich exemplarisch näher erläutert, d.h. sie ist nicht auf diese Ausführung- und Anwendungsbeispiele beschränkt. Verfahrens- und Vorrichtungsmerkmale ergeben sich jeweils analog auch aus Vorrichtungs- bzw. Verfahrensbeschreibungen.

Einzelne Merkmale, die im Zusammenhang mit einem konkreten Ausführungsbeispiel angeben und/oder dargestellt sind, sind nicht auf dieses Ausführungsbeispiel oder die Kombination mit den übrigen Merkmalen dieses Ausführungsbeispiels beschränkt, sondern können im Rahmen des technisch Möglichen, mit jeglichen anderen Varianten, auch wenn sie in den vorliegenden Unterlagen nicht gesondert behandelt sind, kombiniert werden.

Gleiche Bezugszeichen in den einzelnen Figuren und Abbildungen der Zeichnung bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

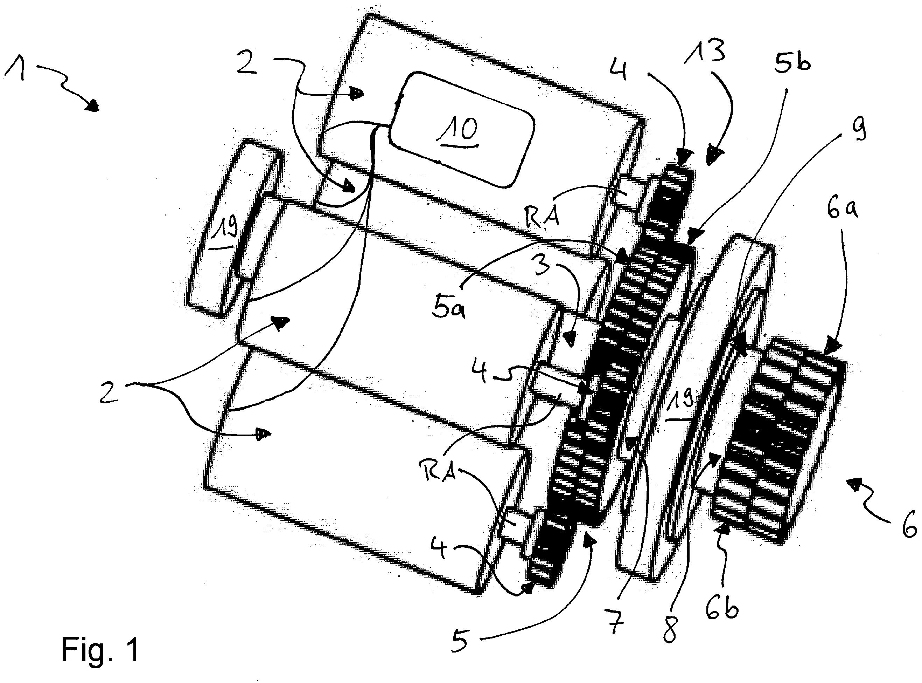

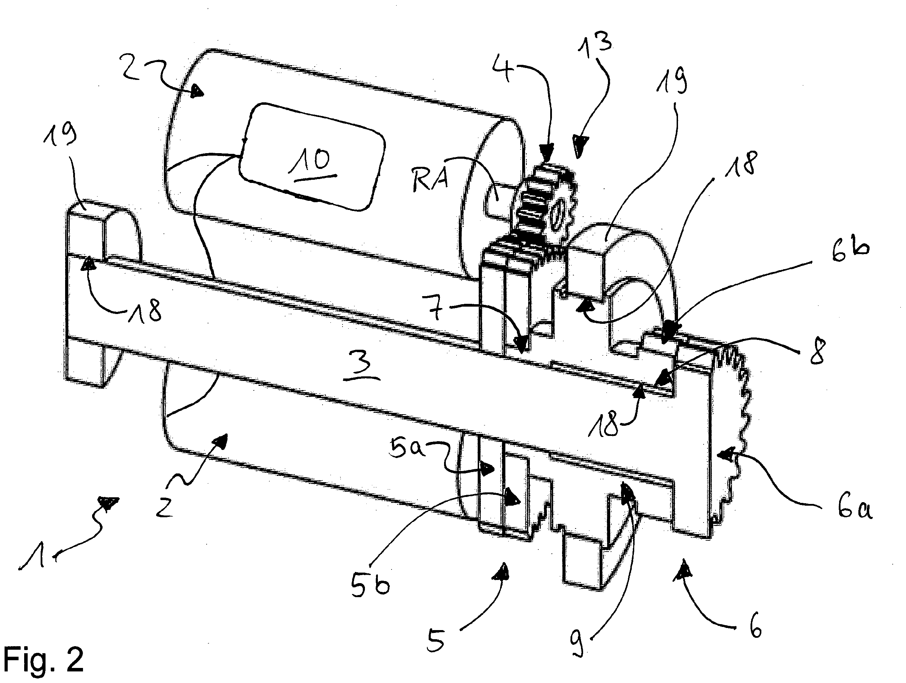

In den Fig. 1 und 2 ist ein erstes Ausführungsbeispiel eines spielfreien Drehantriebs 1 veranschaulicht. Die Fig. 1 zeigt eine schematische perspektivische Ansicht des Grundaufbaus des ersten Ausführungsbeispiels des spielfreien Drehantriebs 1, und die Fig. 2 zeigt eine schematische perspektivische Schnittansicht mit weiteren Einzelheiten davon.

Der spielfreie Drehantrieb 1 enthält, wie der Fig. 1 zu entnehmen ist, eine Mehrzahl von gleichen Elektromotoren 2, die um eine Zentralachse 3 herum angeordnet sind. Die Elektromotoren 2 sind bei diesem Ausführungsbeispiel asynchrone Elektromotoren 2. Es ist nicht zwingend, dass die Elektromotoren 2 baugleich sind. Bei diesem Ausführungsbeispiel kommen vier Elektromotoren 2 zum Einsatz, worauf die Erfindung jedoch nicht beschränkt ist. Grundsätzlich kann der spielfreie Drehantrieb 1 zwei, drei, vier, fünf, sechs oder mehr Elektromotoren 2 enthalten. Die Elektromotoren 2 sind bei diesem Ausführungsbeispiel ferner in bevorzugter Weise gleichmäßig verteilt und gleichmäßig beabstandet längs einer Kreislinie konzentrisch um die Zentralachse 3 angeordnet, was jedoch nicht zwingend der Fall sein muss. Ein weiteres bevorzugtes Kriterium für die Anordnung der Elektromotoren 2 ist eine Symmetrie, um die auftretenden Kräfte innerhalb des Drehantriebs 1 im Gleichgewicht zu halten. Letzeres kann beispielsweise mit paarweise einander gegenüber angeordneten Elektromotoren 2 erreicht werden. Da auch unterschiedliche Elektromotoren 2 zum Einsatz kommen können, können z.B. auch zwei Ringe aus Elektromotoren 2 um die Zentralachse 3 herum angeordnet sein. Der Fachmann kann also in Abhängigkeit von Anforderungen, wie z.B. Baugröße, Antriebsleistung u.v.m. die Elektromotoren 2 und ihre konkrete Anordnung auswählen.

Jeder Elektromotor 2 hat ein Ausgangsritzel 4 an einer zur Zentralachse 3 parallelen Ritzelachse RA. Die Ausgangsritzel 4 aller Elektromotoren 2 greifen an einem Abnahmezahnrad 5 antriebsmäßig an, das koaxial zur Zentralachse 3 angeordnet ist, über die das Abnahmezahnrad 5 den Antrieb durch die Elektromotoren 2 auf ein Abgabezahnrad 6 überträgt, das auch koaxial zur Zentralachse 3 angeordnet ist. Somit kann die Antriebswirkung des Drehantriebs 1 an dem Abgabezahnrad 6 abgenommen werden. Die Ausgangsritzel 4 und das Abnahmezahnrad 5 bilden ein Getriebe 13 mit vorgegebener Über- oder Untersetzung, die durch die Wahl von Radius und Zahnteilung von Ausgangsritzel 4 und Abnahmezahnrad 5 gewählt werden kann.

Das Abnahmezahnrad 5 ist aus einem ersten Abnahmeteilzahnrad 5a und einem dazu axial benachbarten zweiten Abnahmeteilzahnrad 5b gebildet, die bei diesem Ausführungsbeispiel hinsichtlich Radius und Dicke der Räder selbst sowie Zahnanordnung, -tiefe, -dicke und -teilung identisch sind. Gleichermaßen ist das Abgabezahnrad 6 aus einem ersten Abgabeteilzahnrad 6a und einem dazu axial benachbarten zweiten Abgabeteilzahnrad 6b gebildet, die bei diesem Ausführungsbeispiel untereinander hinsichtlich Radius und Dicke der Räder selbst sowie Zahnanordnung, -tiefe, -dicke und -teilung identisch, aber verschieden von den Abnahmeteilzahnrädern 5a und 5b sind.

Das erste Abnahmeteilzahnrad 5a und das erste Abgabeteilzahnrad 6a sind an der Zentralachse 3 axial beabstandet und drehfest, insbesondere starr verbunden angeordnet. Das zweite Abnahmeteilzahnrad 5b und das zweite Abgabeteilzahnrad 6b sind axial beabstandet und drehfest, insbesondere starr verbunden jeweils an einem axialen Ende 7 bzw. 8 einer rohrartigen Hülse 9 angeordnet, die die Zentralachse 3 zwischen dem ersten Abnahmeteilzahnrad 5a und dem ersten Abgabeteilzahnrad 6a umgibt, wie deutlich in der Fig. 2 zu sehen ist. Die rohrartige Hülse 9 ist um die Zentralachse 3 frei drehbar, wobei es genügen würde, wenn die rohrartige Hülse 9 ist um die Zentralachse 3 zumindest um einen vorgebbaren Winkelbereich frei drehbar wäre.

Wie deutlich in der Fig. 1 zu sehen ist, greifen die Ausgangsritzel 4 von zwei Elektromotoren 2 an dem ersten Abnahmeteilzahnrad 5a an und greifen die Ausgangsritzel 4 der beiden anderen Elektromotoren 2 an dem zweiten Abnahmeteilzahnrad 5b antriebsmäßig an. Die mit ihrem Ausgangsritzel 4 an dem ersten Abnahmeteilzahnrad 5a angreifenden Elektromotoren 2 und die mit ihrem Ausgangsritzel 4 an dem zweiten Abnahmeteilzahnrad 5b angreifenden Elektromotoren 2 sind dabei, wie es für alle geradzahligen Mehrzahlen von Elektromotoren 2 bevorzugt ist, Umfangsrichtung der ersten und zweiten Abnahmeteilzahnräder 5a und 5b abwechselnd angeordnet, was dem Gleichgewicht der auftretenden Kräfte innerhalb des Drehantriebs 1 zugutekommt.

Bei einer ungeradzahlige Anzahl von Elektromotoren 2 würde vorzugsweise das Ausgangsritzel 4 eines Elektromotors 2 beliebig an dem ersten Abnahmeteilzahnrad 5a oder dem zweiten Abnahmeteilzahnrad 5b antriebsmäßig angreifen und würden die Ausgangsritzel 4 einer Hälfte der verbleibenden Anzahl von Elektromotoren 2 an dem ersten Abnahmeteilzahnrad 5a und die Ausgangsritzel 4 der anderen Hälfte der verbleibenden Anzahl von Elektromotoren 2 an dem zweiten Abnahmeteilzahnrad 5b antriebsmäßig angreifen. Auch dabei wäre vorzugsweise vorgesehen, dass die Elektromotoren 2, deren Ausgangsritzel 4 an dem ersten Abnahmeteilzahnrad 5a angreifen, und die Elektromotoren 2, deren Ausgangsritzel 4 an dem zweiten Abnahmeteilzahnrad 5b angreifen in Umfangsrichtung der ersten und zweiten Abnahmeteilzahnräder 5a und 5b möglichst abwechselnd angeordnet sind, was ja nicht vollständig zu erreichen ist, da ja an einem Abnahmeteilzahnrad ein Ausgangsritzel mehr angreift als an dem anderen Abnahmeteilzahnrad.

Der spielfreie Drehantrieb 1 enthält ferner für die Mehrzahl von Elektromotoren 2 eine Steuerung 10, die ausgelegt ist, um jeden über sein Ausgangsritzel 4 an dem zweiten Abnahmeteilzahnrad 5b angreifenden Elektromotor 2 zumindest temporär relativ zu den über ihr jeweiliges Ausgangsritzel 4 an dem ersten Abnahmeteilzahnrad 5a angreifenden Elektromotoren 2 zur Aufhebung jeglichen Spiels in entgegengesetzter Drehrichtung zu betreiben. Die Angabe "relativ" bedeutet in diesem Zusammenhang, dass es nicht darauf ankommt, in welche Richtung sich das erste Abnahmeteilzahnrad 5a genau dreht und ob es sich dabei um die Drehrichtung handelt, in der nach der temporären Phase des gegensinnigen Drehens von erstem und zweitem Abnahmeteilzahnrad 5a und 5b der abgegebene Antrieb des spielfreien Drehantriebs 1 erfolgt, sondern dass es nur darauf ankommt, dass eben das erste Abnahmeteilzahnrad 5a und das zweite Abnahmeteilzahnrad 5b in entgegengesetzte Drehrichtungen beaufschlagt werden. Bevorzugt ist es bei einer ungleichen Aufteilung der vorhandenen Elektromotoren 2, wenn die größere Gruppe von Elektromotoren 2 von Anfang an so betrieben wird, dass die Drehrichtung ihrer Ausgangsritzel 4 die Drehrichtung ist, in der der spielfreie Drehantrieb 1 letztlich seine Antriebsleistung abgeben soll.

Mit dieser Steuerung 10 lassen sich insbesondere die folgenden drei Betriebsverfahren des spielfreien Drehantriebs 1 realisieren:
A) In einer Anlaufphase des Drehantriebs 1 wird jeder über sein Ausgangsritzel 4 an dem zweiten Abnahmeteilzahnrad 5b angreifende Elektromotor 2 temporär relativ zu den über ihr jeweiliges Ausgangsritzel 4 an dem ersten Abnahmeteilzahnrad 5a angreifenden Elektromotoren 2 zur Aufhebung jeglichen Spiels in entgegengesetzter Drehrichtung betrieben und werden nach Beendigung der Anlaufphase alle vorhandenen Elektromotoren 2 so betrieben, dass sich ihre Ausgangsritzel 4 in derselben Drehrichtung drehen.
B) Bei einer Drehrichtungsumkehr des Drehantriebs 1 wird nach dem Anhalten aller Elektromotoren 2 aus einem Betrieb in einer Drehrichtung in einer Anlaufphase des Drehantriebs 1 zum Betrieb der Elektromotoren 2 für die entgegengesetzte neue Drehrichtung jeder über sein Ausgangsritzel 4 an dem zweiten Abnahmeteilzahnrad 5b angreifende Elektromotor 2 temporär relativ zu den über ihr jeweiliges Ausgangsritzel 4 an dem ersten Abnahmeteilzahnrad 5a angreifenden Elektromotoren 2 zur Aufhebung jeglichen Spiels in Drehrichtung entgegengesetzt zur neuen Drehrichtung betrieben und werden nach Beendigung der Anlaufphase alle vorhandenen Elektromotoren 2 so betrieben werden, dass sich ihre Ausgangsritzel 4 in derselben neuen Drehrichtung drehen.
C) Bei einem Anhalten oder bei einer Drehrichtungsumkehr des Drehantriebs 1 vor dem Anhalten aller Elektromotoren 2 aus einem Betrieb in einer Drehrichtung wird jeder über sein Ausgangsritzel 4 an dem zweiten Abnahmeteilzahnrad 5b angreifende Elektromotor 2 temporär relativ zu den über ihr jeweiliges Ausgangsritzel 4 an dem ersten Abnahmeteilzahnrad 5a angreifenden Elektromotoren 2 zur Aufhebung jeglichen Spiels in Drehrichtung entgegengesetzt zur vorherigen Drehrichtung betrieben.

Damit ist bei dem spielfreien Drehantrieb 1
durch die Gestaltung von geteiltem Abnahmezahnrad 5 mit den beiden Abnahmeteilzahnrädern 5a und 5b und geteiltem Abgabezahnrad 6 mit den beiden Abgabeteilzahnrädern 6a und 6b, wobei das erste Abnahmeteilzahnrad 5a und das erste Abgabeteilzahnrad 6a drehmäßig gekoppelt sind und das zweite Abnahmeteilzahnrad 5b und das zweite Abgabeteilzahnrad 6b drehmäßig gekoppelt sind, und
durch die Ausführung, dass wenigstens das Ausgangsritzel 4 eines Elektromotors 2 an dem ersten oder zweiten Abnahmeteilzahnrad 5a bzw. 5b angreift während die Ausgangsritzel 4 aller anderen Elektromotoren 2 entsprechend an dem zweiten oder ersten Abnahmeteilzahnrad 5b bzw. 5a angreifen, sowie die Steuerung 10, mit der jeder über sein Ausgangsritzel 4 an dem ersten oder zweiten Abnahmeteilzahnrad 5a bzw. 5b angreifende Elektromotor 2 zumindest temporär relativ zu den über ihr jeweiliges Ausgangsritzel 4 entsprechend an dem zweiten oder ersten Abnahmeteilzahnrad 5b bzw. 5a angreifenden Elektromotoren 2 zur Aufhebung jeglichen Spiels in entgegengesetzter Drehrichtung zu betreiben ist,
eine variable Einstellung der Verspannung am zwischen einerseits den Ausgangsritzeln 4 und den ersten und zweiten Abnahmeteilzahnrädern 5a und 5b und andererseits zwischen den ersten und zweiten Abgabeteilzahnrädern 6a und 6b und einer Zahnausbildung eines Zahnrades oder einer Zahnstange ermöglicht, das bzw. die von dem spielfreien Drehantrieb 1 angetrieben oder verstellt wird. Somit sorgt der spielfreie Drehantrieb 1 für eine durchgehende Spielfreiheit von den Ausgangsritzeln 4 der Elektromotoren 2 bis zum von dem spielfreien Drehantrieb 1 angetriebenen oder verstellten Objekt. Durch den spielfreien Drehantrieb 1 kann aber nicht nur die Höhe der Verspannung zwischen den einzelnen Drehkomponenten des Drehantriebs 1 und dem angetriebenen oder verstellten Objekt zur Spielaufhebung oder -vermeidung variabel eingestellt werden, sondern wird auch im Falle einer momentan nicht benötigten Verspannung im Betrieb ein erheblicher Verlust des zulässigen übertragbaren Drehmomentes verhindert, da sozusagen nach Erledigung der Spielaufhebung in Anlauf- oder Drehrichtungsumkehrphasen der gleichgerichtete Antrieb der ersten und zweiten Abnahmeteilzahnräder 5a und 5b dazu führt, dass die beiden Abgabeteilzahnräder 6a und 6b gemeinsam zur Drehmomentabgabe wirken, was in der Praxis eine Steigerung des maximal übertragbaren Drehmomentes um einen Faktor 3 bis 4 gegenüber einer Drehmomentabgabe nur über eines der beiden Abgabeteilzahnräder 6a und 6b zur Folge hat, wie es beispielsweise nach der DE 102006046694 A1 mit einem spielfreien Stirnrad der der Fall wäre, wie es auch in einem Ausführungsbeispiel der EP 2822159 A2 verwendet ist und bei dem die Verspannung der beiden Teilzahnräder immer gegeben ist, also für die gewünschte Drehmomentübertragung nur das in der erforderlichen Drehrichtung "vorne" liegende Teilzahnrad beitragen kann. Außerdem wirkt ein solches vorbekanntes spielfreies Stirnrad nur für eine Spielaufhebung zwischen einerseits den beiden Abgabeteilzahnrädern und dem davon angetriebene Objekt, nicht aber auf ein Spiel zwischen den Ausgangsritzeln der Elektromotoren und dem Abnahmezahnrad, mit dem die Ausgangsritzel kämmen. Eine Spielaufhebung mittels eines solchen spielfreien Stirnrades erfolgt also nicht durchgängig im gesamten Antriebsstrang.

Bei zur Spielaufhebung gegensinnig an einem gemeinsamen Abnahmezahnrad angreifenden Ausgangsritzeln, wie es bei anderen Ausführungsbeispielen der EP 2822159 A2 vorgesehen ist, erfolgt eine Spielaufhebung nur zwischen den Ausgangsritzeln der Elektromotoren und dem Abnahmezahnrad, nicht aber zwischen dem Abgabezahnrad und dem davon angetriebenen Objekt, d.h. die Spielaufhebung ist auch dabei nicht durchgängig im gesamten Antriebsstrang. Eine Kombination der gegensinnig an einem gemeinsamen Abnahmezahnrad angreifenden Ausgangsritzeln mit dem vorerwähnten spielfreien Stirnrad bietet bei entsprechend hohem Aufwand zwar eine durchgängige Spielaufhebung, stellt aber zur effektiven Drehmomentübertragung nur eines der beiden Abgabeteilzahnräder 6a und 6b zur Verfügung, so dass maximal übertragbare Drehmoment entsprechend beschränkt ist.

Bei dem Ausführungsbeispiel des spielfreien Drehantriebs 1 gemäß den Fig. 1 und 2 sind für die Gesamtheit der Elektromotoren 2 zwei Frequenzumrichter (nicht dargestellt) enthalten, die von der Steuerung 10 zur Aufhebung jeglichen Spiels unterschiedlich angesteuert werden. Der Einsatz und die Gestaltung solcher Frequenzumrichter sind für den Fachmann nach nunmehr Kenntnis ihrer Verwendung für den spielfreien Drehantrieb 1 unproblematisch, so dass graphische Darstellungen und weitere Erläuterungen weggelassen werden.

Der spielfreie Drehantrieb 1 enthält ferner wenigstens einen Positions-, Winkel- oder Lagesensor (nicht dargestellt), der mit der Steuerung 10 zur Ist-Wert-Übertragung gekoppelt ist. Dabei ist dann die Steuerung ausgelegt, die Elektromotoren 2 in Abhängigkeit von wenigstens einem Ist-Wert und wenigstens einem festlegbaren oder festgelegten Soll-Wert zu steuern, um den spielfreien Drehantrieb 1 auf den Soll-Wert einzustellen. Solche Positions-, Winkel- oder Lagesensoren sind vorzugsweise der Zentralachse 3 zugeordnet, können aber auch alternativ oder zusätzlich den ersten und zweiten Abnahmeteilzahnrädern 5a und 5b und/oder den ersten und zweiten Abgabeteilzahnrädern 6a und 6b und/oder den Ausgangsritzeln 4 oder deren Ritzelachsen RA zugeordnet sein. Der Einsatz und die Gestaltung solcher Positions-, Winkel- oder Lagesensoren sowie die geeignete Ausgestaltung der Steuerung 10 sind für den Fachmann nach nunmehr Kenntnis ihrer Verwendung für den spielfreien Drehantrieb 1 unproblematisch, so dass graphische Darstellungen und weitere Erläuterungen weggelassen werden.

Wie es ferner bevorzugt ist, ist die Steuerung 10 ausgelegt, so auf die einzelnen Elektromotoren 2 einzuwirken, dass die einzelnen Elektromotoren 2 gleichmäßig belastet werden und dass das Gesamtdrehmoment des spielfreien Drehantriebs 1 auf alle Elektromotoren 2 synchron verteilt wird.

Der Vollständigkeit halber sind in den Fig. 1 und 2 noch Lagerungen der Zentralachse 3 und der Hülse 9 dargestellt, über die letztere an Halteteilen 19 abgestützt sind, über die der spielfreien Drehantrieb 1 montiert werden kann.

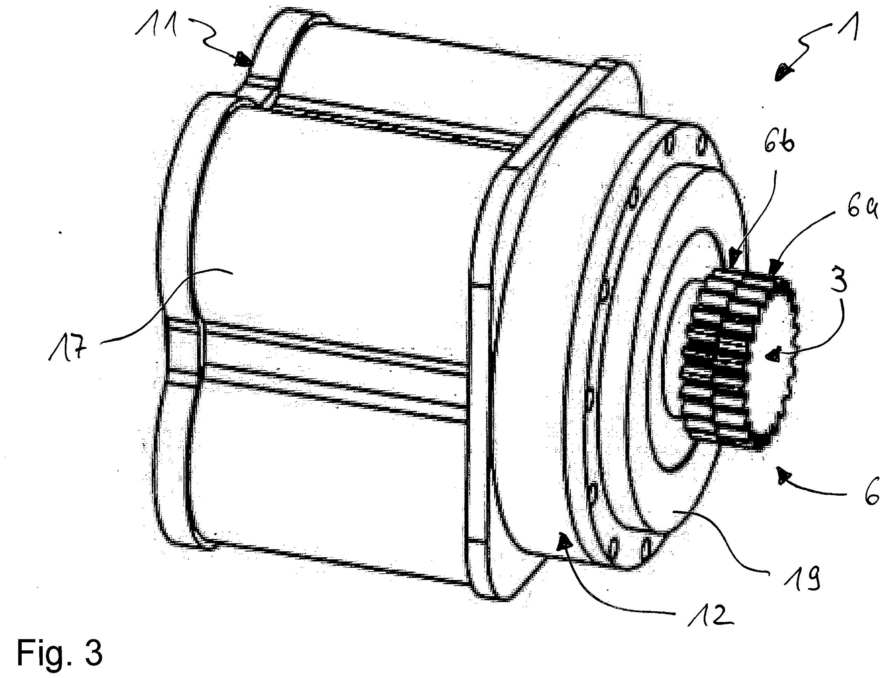

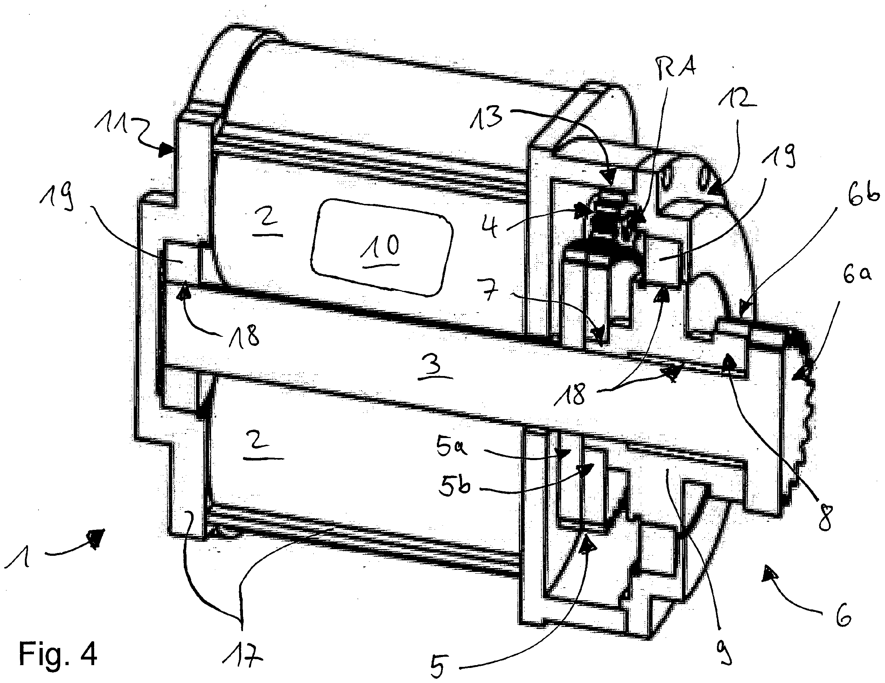

Bei dem zweiten Ausführungsbeispiel des spielfreien Drehantriebs 1 gemäß den Fig. 3 und 4 sind die Elektromotoren 2 der Mehrzahl von Elektromotoren 2 mit einem Gehäuse 17 zu einer Baueinheit 11 zusammengefasst, die auch eine deckelartige Halterung 12 enthält, in der die Zentralachse 3 drehbar gelagert ist. Die Steuerung 10 ist ebenfalls in dem Gehäuse 17 untergebracht. Die übrigen Merkmale des zweiten Ausführungsbeispiels des spielfreien Drehantriebs 1 gemäß den Fig. 3 und 4 stimmen mit den Merkmalen des ersten Ausführungsbeispiels des spielfreien Drehantriebs 1 gemäß den Fig. 1 und 2 überein, so dass dazu zur Vermeidung bloßer Wiederholungen keine erneute Beschreibung erfolgt, sondern vollumfänglich auf die vorherigen Ausführungen zum ersten Ausführungsbeispiel des spielfreien Drehantriebs 1 gemäß den Fig. 1 und 2 verwiesen wird.

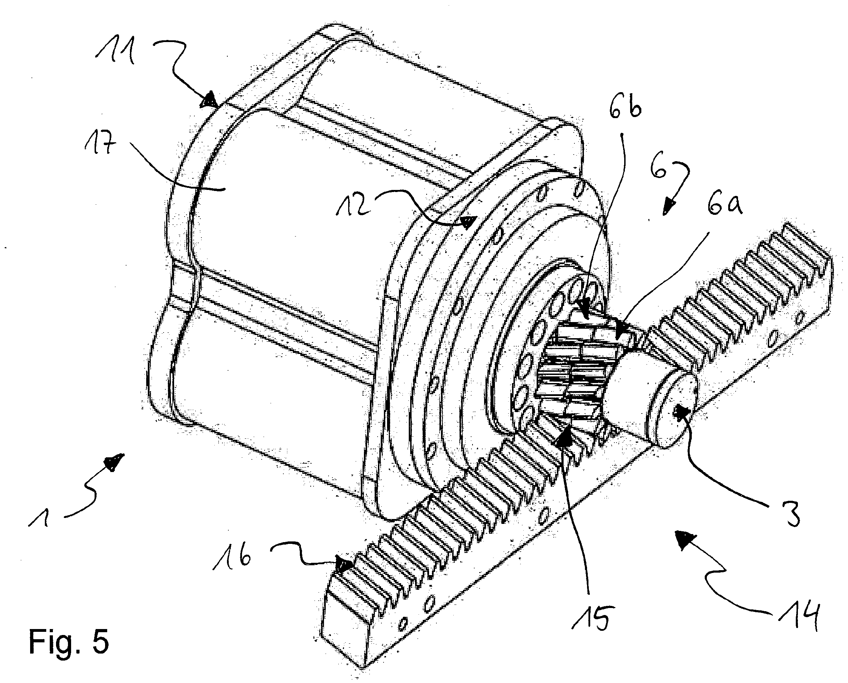

Die Fig. 5 zeigt ein Ausführungsbeispiel eines Zahnstangenantriebs 14 mit einem spielfreien Drehantrieb 1 in einer schematischen perspektivischen Ansicht. Wie gut zu erkennen ist, ist das aus dem ersten Abgabeteilzahnrad 6a und dem dazu axial benachbarten zweiten Abgabeteilzahnrad 6b gebildete Abgabezahnrad 6 ein Stirnrad 15 ist, das mit einer Zahnstange 16 kämmt. Im Gegensatz zu den beiden Abgabeteilzahnrädern 6a und 6b, die für die ersten und zweiten Ausführungsbeispiele des spielfreien Drehantriebs 1 gemäß den Fig. 1 und 2 bzw. 3 und 4 gezeigt sind, weisen das erste und das zweite Abgabeteilzahnrad 6a und 6b passend zu der Zahngestaltung der Zahnstange 16 eine Schrägverzahnung auf, die ebenfalls im Umfang der vorliegenden Erfindung liegt. Die übrigen Merkmale des Ausführungsbeispiels des Zahnstangenantriebs 14 gemäß der Fig. 5 stimmen mit den Merkmalen der ersten und zweiten Ausführungsbeispiele des spielfreien Drehantriebs 1 gemäß den Fig. 1 und 2 bzw. 3 und 4 überein, so dass dazu zur Vermeidung bloßer Wiederholungen keine erneute Beschreibung erfolgt, sondern vollumfänglich auf die vorherigen Ausführungen zu den ersten und zweiten Ausführungsbeispielen des spielfreien Drehantriebs 1 gemäß den Fig. 1 und 2 bzw. 3 und 4 verwiesen wird. Das Ausführungsbeispiel des Zahnstangenantriebs 14 gemäß der Fig. 5 zeigt jedenfalls, dass
durch die Gestaltung von geteiltem Abnahmezahnrad 5 mit den beiden Abnahmeteilzahnrädern 5a und 5b und geteiltem Abgabezahnrad 6 mit den beiden Abgabeteilzahnrädern 6a und 6b, wobei das erste Abnahmeteilzahnrad 5a und das erste Abgabeteilzahnrad 6a drehmäßig gekoppelt sind und das zweite Abnahmeteilzahnrad 5b und das zweite Abgabeteilzahnrad 6b drehmäßig gekoppelt sind, und
durch die Ausführung, dass wenigstens das Ausgangsritzel 4 eines Elektromotors 2 an dem ersten oder zweiten Abnahmeteilzahnrad 5a bzw. 5b angreift während die Ausgangsritzel 4 aller anderen Elektromotoren 2 entsprechend an dem zweiten oder ersten Abnahmeteilzahnrad 5b bzw. 5a angreifen, sowie die Steuerung 10, mit der jeder über sein Ausgangsritzel 4 an dem ersten oder zweiten Abnahmeteilzahnrad 5a bzw. 5b angreifende Elektromotor 2 zumindest temporär relativ zu den über ihr jeweiliges Ausgangsritzel 4 entsprechend an dem zweiten oder ersten Abnahmeteilzahnrad 5b bzw. 5a angreifenden Elektromotoren 2 zur Aufhebung jeglichen Spiels in entgegengesetzter Drehrichtung zu betreiben ist,
erstens eine durchgängige Verspannung in dem gesamten Antriebsstrang von den Ausgangsritzeln 4 der Elektromotoren 2 bis hin zur Zahnstange 16 zur Spielaufhebung in diesem gesamten Antriebsstrang erreicht wird und dass zweitens diese Verspannung variabel einstellbar ist.

Bei dem Zahnstangenantrieb 14 handelt es sich somit um eine spielfreie Motorgetriebeeinheit. U.a. liegt die Anwendung des spielfreien Drehantriebs bei einen Zahnstangenantrieb 14 im allgemeinen Maschinebau und insbesondere im Sondermaschinenbau. Bei der Motorgetriebeeinheit werden mehrere Einzelmotoren verbaut, und durch intelligente Ansteuerung der einzelnen Motoren kann der komplette Antriebsstrang der Motorgetriebeeinheit durchgehend je nach Bedarf verspannt werden, so dass sie bedarfsgerecht kein Umkehrspiel aufweist. Die Motorgetriebeeinheit ist für Anwendungen geeignet, die eine besonders hohe Anforderung an die Präzision stellen.

Zusammenfassend schafft die Erfindung einen spielfreien Drehantrieb 1, bei dem eine durchgängige Verspannung des gesamten Antriebsstranges durch unterschiedliche Ansteuerung von Elektromotoren 2 durch eine Steuerung 10 und entsprechend getrennte Weiterleitung des Antriebs von den Elektromotoren hin zu Abgabeteilzahnrädern 6a und 6b eines Abgabezahnrades 6 zur Spielaufhebung jedenfalls temporär gewährleistet ist. Die Verspannung kann durch die Steuerung 10 je nach Betriebszustand des spielfreien Drehantriebes 1 variabel gestaltet werden, wobei insbesondere im Vortrieb alle Elektromotoren 2 auch ohne Verspannung in die gleiche Drehrichtung betrieben werden können, so dass beide Abgabeteilzahnräder 6a und 6b das Drehmoment übertragen.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen der Ansprüche und der allgemeinen Darstellungen in der Einleitung dieser Beschreibung sowie der Beschreibung der Ausführungsbeispiele entnehmen und mit seinem fachmännischen Wissen sowie dem Stand der Technik kombinieren kann. Insbesondere sind alle einzelnen Merkmale und Ausgestaltungsmöglichkeiten der Erfindung kombinierbar.

### Bezugszeichenliste

- 1: spielfreier Drehantrieb
- 2: Elektromotoren
- 3: Zentralachse
- 4: Ausgangsritzel
- 5: Abnahmezahnrad
- 5a: erstes Abnahmeteilzahnrad
- 5b: zweites Abnahmeteilzahnrad
- 6: Abgabezahnrad
- 6a: erstes Abgabeteilzahnrad
- 6b: zweites Abgabeteilzahnrad
- 7: axialen Ende von 9
- 8: axialen Ende von 9
- 9: rohrartige Hülse
- 10: Steuerung
- 11: Baueinheit
- 12: deckelartige Halterung
- 13: Getriebe
- 14: Zahnstangenantrieb
- 15: Stirnrad
- 16: Zahnstange
- 17: Gehäuse
- 18: Lagerungen von 3 und 9
- 19: Halteteile
- RA: Ritzelachse

## Patentansprüche

1. Spielfreier Drehantrieb (1), der eine Mehrzahl von Elektromotoren (2) enthält, die um eine Zentralachse (3) herum angeordnet sind und je ein Ausgangsritzel (4) haben, das an einem zur Zentralachse (3) koaxialen Abnahmezahnrad (5) antriebsmäßig angreift, von dem die Antriebswirkung der Elektromotoren (2) auf ein zum Abnahmezahnrad (5) koaxialen Abgabezahnrad (6) übertragen wird, an dem die Antriebswirkung des Drehantriebs (1) abnehmbar ist,
wobei das Abgabezahnrad (6) aus einem ersten Abgabeteilzahnrad (6a) und einem dazu axial benachbarten zweiten Abgabeteilzahnrad (6b) gebildet ist,
J **dadurch gekennzeichnet,**
**dass** das Abnahmezahnrad (5) aus einem ersten Abnahmeteilzahnrad (5a) und einem dazu axial benachbarten zweiten Abnahmeteilzahnrad (5b) gebildet ist,
**dass** das erste Abnahmeteilzahnrad (5a) und das erste Abgabeteilzahnrad (6a) an der Zentralachse (3) axial beabstandet und drehfest angeordnet sind,
**dass** das zweite Abnahmeteilzahnrad (5b) und das zweite Abgabeteilzahnrad (6b) axial beabstandet und drehfest jeweils an einem axialen Ende (7, 8) einer rohrartigen Hülse (9) angeordnet sind, die die Zentralachse (3) zwischen dem ersten Abnahmeteilzahnrad (5a) und dem ersten Abgabeteilzahnrad (6a) zumindest um einen vorgebbaren Winkelbereich frei drehbar umgibt,
**dass** wenigstens das Ausgangsritzel (4) eines Elektromotors (2) an dem ersten Abnahmeteilzahnrad (5a) und wenigstens das Ausgangsritzel (4) eines anderen Elektromotors (2) an dem zweiten Abnahmeteilzahnrad (5b) antriebsmäßig angreifen, und
**dass** eine Steuerung (10) für die Mehrzahl von Elektromotoren (2) enthalten und ausgelegt ist, um jeden über sein Ausgangsritzel (4) an dem zweiten Abnahmeteilzahnrad (5b) angreifenden Elektromotor (2) zumindest temporär relativ zu den über ihr jeweiliges Ausgangsritzel (4) an dem ersten Abnahmeteilzahnrad (5a) angreifenden Elektromotoren (2) zur Aufhebung jeglichen Spiels in entgegengesetzter Drehrichtung zu betreiben.

2. Spielfreier Drehantrieb (1) nach Anspruch 1,
**dadurch gekennzeichnet,**
**dass** die Elektromotoren (2) der Mehrzahl von Elektromotoren (2) zu einer Baueinheit (11) zusammengefasst sind, die auch eine Halterung (12) enthält, in der die Zentralachse (3) drehbar gelagert ist.

3. Spielfreier Drehantrieb (1) nach Anspruch 1 oder 2,
**dadurch gekennzeichnet,**
**dass** die Elektromotoren (2) der Mehrzahl von Elektromotoren (2) gleichmäßig verteilt und/oder gleichmäßig beabstandet und/oder längs einer Kreislinie konzentrisch um die Zentralachse (3) angeordnet sind.

4. Spielfreier Drehantrieb (1) nach einem der vorhergehenden Ansprüche,
**dadurch gekennzeichnet,**
**dass** bei einer geradzahlige Anzahl von Elektromotoren (2) die Ausgangsritzel (4) einer Hälfte der Elektromotoren (2) an dem ersten Abnahmeteilzahnrad (5a) und die Ausgangsritzel (4) der anderen Hälfte der Elektromotoren (2) an dem zweiten Abnahmeteilzahnrad (5b) antriebsmäßig angreifen, und dass die Elektromotoren (2), deren Ausgangsritzel (4) an dem ersten Abnahmeteilzahnrad (5a) angreifen, und die Elektromotoren (2), deren Ausgangsritzel (4) an dem zweiten Abnahmeteilzahnrad (5b) angreifen in Umfangsrichtung der ersten und zweiten Abnahmeteilzahnräder (5a, 5b) abwechselnd angeordnet sind, und
**dass** bei einer ungeradzahlige Anzahl von Elektromotoren (2) das Ausgangsritzel (4) eines Elektromotors (2) beliebig an dem ersten Abnahmeteilzahnrad (5a) oder dem zweiten Abnahmeteilzahnrad (5b) antriebsmäßig angreift und die Ausgangsritzel (4) einer Hälfte der verbleibenden Anzahl von Elektromotoren (2) an dem ersten Abnahmeteilzahnrad (5a) und die Ausgangsritzel (4) der anderen Hälfte der verbleibenden Anzahl von Elektromotoren (2) an dem zweiten Abnahmeteilzahnrad (5b) antriebsmäßig angreifen, und dass die Elektromotoren (2), deren Ausgangsritzel (4) an dem ersten Abnahmeteilzahnrad (5a) angreifen, und die Elektromotoren (2), deren Ausgangsritzel (4) an dem zweiten Abnahmeteilzahnrad (5b) angreifen in Umfangsrichtung der ersten und zweiten Abnahmeteilzahnräder (5a, 5b) möglichst abwechselnd angeordnet sind.

5. Spielfreier Drehantrieb (1) nach einem der vorhergehenden Ansprüche,
**dadurch gekennzeichnet,**
**dass** das erste Abnahmeteilzahnrad (5a) und das zweite Abnahmeteilzahnrad (5b) hinsichtlich Radius, Dicke, Zahnanordnung, -tiefe, -dicke und/oder -teilung zumindest annähernd identisch sind.

6. Spielfreier Drehantrieb (1) nach einem der vorhergehenden Ansprüche,
**dadurch gekennzeichnet,**
**dass** das erste Abgabeteilzahnrad (6a) und das zweite Abgabeteilzahnrad (6b) hinsichtlich Radius, Dicke, Zahnanordnung, -tiefe, -dicke und/oder -teilung zumindest annähernd identisch sind.

7. Spielfreier Drehantrieb (1) nach einem der vorhergehenden Ansprüche,
**dadurch gekennzeichnet,**
**dass** die Elektromotoren (2) baugleich und/oder asynchrone Elektromotoren (2) sind.

8. Spielfreier Drehantrieb (1) nach einem der vorhergehenden Ansprüche,
**dadurch gekennzeichnet,**
**dass** die Ausgangsritzel (4) und das Abnahmezahnrad (5) ein Getriebe (13) mit vorgebbarer Über- oder Untersetzung bilden.

9. Spielfreier Drehantrieb (1) nach einem der vorhergehenden Ansprüche,
**dadurch gekennzeichnet,**
**dass** für die Gesamtheit der Elektromotoren (2) zwei Frequenzumrichter enthalten sind, die von der Steuerung (10) zur Aufhebung jeglichen Spiels unterschiedlich angesteuert werden.

10. Spielfreier Drehantrieb (1) nach einem der vorhergehenden Ansprüche,
**dadurch gekennzeichnet,**
**dass** wenigstens ein Positions-, Winkel- oder Lagesensor enthalten ist, der mit der Steuerung (10) zur Ist-Wert-Übertragung gekoppelt ist, und dass die Steuerung (10) ausgelegt ist, die Elektromotoren (2) in Abhängigkeit von wenigstens einem Ist-Wert und wenigstens einem festlegbaren oder festgelegten Soll-Wert zu steuern, um den Drehantrieb (1) auf den Soll-Wert einzustellen.

11. Spielfreier Drehantrieb (1) nach einem der vorhergehenden Ansprüche,
**dadurch gekennzeichnet,**
**dass** die Steuerung (10) ausgelegt ist, so auf die einzelnen Elektromotoren (2) einzuwirken, dass die einzelnen Elektromotoren (2) gleichmäßig belastet werden, und/oder dass das Gesamtdrehmoment des Drehantriebs (1) auf alle Elektromotoren (2) synchron verteilt wird.

12. Betriebsverfahren für einen spielfreien Drehantrieb (1) nach einem der vorhergehenden Ansprüche,
**dadurch gekennzeichnet,**
**dass** in einer Anlaufphase des Drehantriebs (1) jeder über sein Ausgangsritzel (4) an dem zweiten Abnahmeteilzahnrad (5b) angreifende Elektromotor (2) temporär relativ zu den über ihr jeweiliges Ausgangsritzel (4) an dem ersten Abnahmeteilzahnrad (5a) angreifenden Elektromotoren (2) zur Aufhebung jeglichen Spiels in entgegengesetzter Drehrichtung betrieben wird, und dass nach Beendigung der Anlaufphase alle vorhandenen Elektromotoren (2) so betrieben werden, dass sich ihre Ausgangsritzel (4) in derselben Drehrichtung drehen.

13. Betriebsverfahren für einen spielfreien Drehantrieb (1) nach einem der Ansprüche 1 bis 11,
**dadurch gekennzeichnet,**
**dass** bei einer Drehrichtungsumkehr des Drehantriebs (1) nach dem Anhalten aller Elektromotoren (2) aus einem Betrieb in einer Drehrichtung in einer Anlaufphase des Drehantriebs (1) zum Betrieb der Elektromotoren (2) für die entgegengesetzte neue Drehrichtung jeder über sein Ausgangsritzel (4) an dem zweiten Abnahmeteilzahnrad (5b) angreifende Elektromotor (2) temporär relativ zu den über ihr jeweiliges Ausgangsritzel (4) an dem ersten Abnahmeteilzahnrad (5a) angreifenden Elektromotoren (2) zur Aufhebung jeglichen Spiels in Drehrichtung entgegengesetzt zur neuen Drehrichtung betrieben wird, und dass nach Beendigung der Anlaufphase alle vorhandenen Elektromotoren (2) so betrieben werden, dass sich ihre Ausgangsritzel (4) in derselben neuen Drehrichtung drehen.

14. Betriebsverfahren für einen spielfreien Drehantrieb (1) nach einem der Ansprüche 1 bis 11,
**dadurch gekennzeichnet,**
**dass** bei einem Anhalten oder bei einer Drehrichtungsumkehr des Drehantriebs (1) vor dem Anhalten aller Elektromotoren (2) aus einem Betrieb in einer Drehrichtung jeder über sein Ausgangsritzel (4) an dem zweiten Abnahmeteilzahnrad (5b) angreifende Elektromotor (2) temporär relativ zu den über ihr jeweiliges Ausgangsritzel (4) an dem ersten Abnahmeteilzahnrad (5a) angreifenden Elektromotoren (2) zur Aufhebung jeglichen Spiels in Drehrichtung entgegengesetzt zur vorherigen Drehrichtung betrieben wird.

15. Zahnstangenantrieb (14) mit einem spielfreien Drehantrieb (1) nach einem der Ansprüche 1 bis 11, **dadurch gekennzeichnet, dass** das aus dem ersten Abgabeteilzahnrad (6a) und dem dazu axial benachbarten zweiten Abgabeteilzahnrad (6b) gebildete Abgabezahnrad (6) ein Stirnrad (15) ist, das mit einer Zahnstange (16) kämmt.

## Claims

1. Play-free rotary drive (1), comprising a plurality of electric motors (2) arranged around a central axis (3) and each having an output pinion (4) which engages with a receiving gearwheel (5) coaxial to the central axis (3) in the manner of a drive, from which receiving gearwheel (5) the drive effect of the electric motors (2) is transmitted to a delivering gearwheel (6) coaxial to the receiving gearwheel (5) at which delivering gearwheel (6) the drive effect of the rotary drive (1) can be taken, wherein the delivering gearwheel (6) is provided from a first delivering part-gearwheel (6a) and a second delivering part-gearwheel (6b) axially adjacent thereto, **characterised**
**in that** the receiving gearwheel (5) is provided from a first receiving part-gearwheel (5a) and a second receiving part-gearwheel (5b) axially adjacent thereto,
**in that** the first receiving part-gearwheel (5a) and the first delivering part-gearwheel (6a) are arranged non-rotatably and axially remote on the central axis (3),
**in that** the second receiving part-gearwheel (5b) and the second delivering part-gearwheel (6b) are arranged non-rotatably and axially remote at an axial end (7, 8) respectively of a tubular sleeve (9) which between the first receiving part-gearwheel (5a) and the first delivering part-gearwheel (6a) surrounds the central axis (3) at least freely rotatably through a predefinable angular range,
**in that** at least the output pinion (4) of an electric motor (2) and at least the output pinion (4) of another electric motor (2) engage respectively with the first receiving part-gearwheel (5a) and the second receiving part-gearwheel (5b) in the manner of a drive, and
**in that** a control system (10) for the plurality of electric motors (2) is included and designed in order to operate each electric motor (2) engaging via its output pinion (4) with the second receiving part-gearwheel (5b) at least temporarily in the opposing direction of rotation relative to the electric motors (2) engaging with the first receiving part-gearwheel (5a) via their respective output pinion (4) in order to eliminate any play.

2. Play-free rotary drive (1) according to claim 1, **characterised in that** the electric motors (2) of the plurality of electric motors (2) are combined into an assembly (11) which also includes a mount (12) in which the central axis (3) is rotatably supported.

3. Play-free rotary drive (1) according to claim 1 or claim 2, **characterised in that** the electric motors (2) of the plurality of electric motors (2) are arranged to be equally distributed and/or equally remote from one another and/or along a circular line concentrically around the central axis (3).

4. Play-free rotary drive (1) according to any one of the preceding claims, **characterised in that** in the case of an even number of electric motors (2) the output pinions (4) of half the number of electric motors (2) engage with the first receiving part-gearwheel (5a) and the output pinions (4) of the other half of the number of electric motors (2) engage with the second receiving part-gearwheel (5b) in the manner of a drive, and **in that** the electric motors (2) whose output pinions (4) engage with the first receiving part-gearwheel (5a), and the electric motors (2) whose output pinions (4) engage with the second receiving part-gearwheel (5b) are arranged alternately in the peripheral direction of the first and second receiving part-gearwheels (5a, 5b), and
**in that** in the case of an odd number of electric motors (2) the output pinion (4) of a non-specified electric motor (2) engages in the manner of a drive with the first receiving part-gearwheel (5a) or the second receiving part-gearwheel (5b), and the output pinions (4) of half the remaining number of electric motors (2) engage in the manner of a drive with the first receiving part-gearwheel (5a) and the output pinions (4) of the other half of the remaining number of electric motors (2) engage in the manner of a drive with the second receiving part-gearwheel (5b), and **in that** the electric motors (2) whose output pinions (4) engage with the first receiving part-gearwheel (5a) and the electric motors (2) whose output pinions (4) engage with the second receiving part-gearwheel (5b) are arranged if possible alternately in the peripheral direction of the first and second receiving part-gearwheels (5a, 5b).

5. Play-free rotary drive (1) according to any one of the preceding claims, **characterised in that** the first receiving part-gearwheel (5a) and the second receiving part-gearwheel (5b) are at least approximately identical in respect of radius, thickness, tooth arrangement, tooth depth, tooth thickness and/or tooth pitch.

6. Play-free rotary drive (1) according to any one of the preceding claims, **characterised in that** the first delivering part-gearwheel (6a) and the second delivering part-gearwheel (6b) are at least approximately identical in respect of radius, thickness, tooth arrangement, tooth depth, tooth thickness and/or tooth pitch.

7. Play-free rotary drive (1) according to any one of the preceding claims, **characterised in that** the electric motors (2) are identical in construction and/or are asynchronous electric motors (2).

8. Play-free rotary drive (1) according to any one of the preceding claims, **characterised in that** the output pinions (4) and the receiving gearwheel (5) form a transmission (13) with a predefinable gear increase or reduction.

9. Play-free rotary drive (1) according to any one of the preceding claims, **characterised in that** for all the electric motors (2) two frequency converters are included which are driven differently by the control system (10) to eliminate any play.

10. Play-free rotary drive (1) according to any one of the preceding claims, **characterised in that** at least one position, angle or attitude sensor is included which is coupled to the control system (10) for the transmission of actual values, and **in that** the control system (10) is designed to control the electric motors (2) as a function of at least one actual value and at least one definable or defined target value, in order to set the rotary drive (1) to the target value.

11. Play-free rotary drive (1) according to any one of the preceding claims, **characterised in that** the control system (10) is designed to act upon the individual electric motors (2) such that said electric motors (2) are loaded evenly, and/or such that the total torque of the rotary drive (1) is distributed synchronously over all the electric motors (2).

12. Operating method for a play-free rotary drive (1) according to any one of the preceding claims, **characterised in that** during a starting phase of the rotary drive (1) each electric motor (2) engaging with the second receiving part-gearwheel (5b) via its output pinion (4) is temporarily operated in the opposing direction of rotation relative to the electric motors (2) engaging with the first receiving part-gearwheel (5a) via their respective output pinion (4) in order to eliminate any play, and **in that** after completing the starting phase all the existing electric motors (2) are operated such that their output pinions (4) rotate in the same direction of rotation.

13. Operating method for a play-free rotary drive (1) according to any one of claims 1 to 11, **characterised in that** in the event of a reversal of the direction of rotation of the rotary drive (1) after stopping all the electric motors (2) from operating in one direction of rotation during a starting phase of the rotary drive (1), to operate the electric motors (2) for the opposing new direction of rotation, each electric motor (2) engaging with the second receiving part-gearwheel (5b) via its output pinion (4) is temporarily operated relative to the electric motors (2) engaging with the first receiving part-gearwheel (5a) via the respective output pinion (4) in the direction of rotation opposed to the new direction of rotation in order to eliminate any play, and **in that** after completing the starting phase all the existing electric motors (2) are operated such that their output pinions (4) rotate in the same new direction of rotation.

14. Operating method for a play-free rotary drive (1) according to any one of claims 1 to 11, **characterised in that** when stopping or in the case of a reversal of the direction of rotation of the rotary drive (1) before stopping all the electric motors (2) from operation in one direction of rotation, each electric motor (2) engaging with the second receiving part-gearwheel (5b) via its output pinion (4) is temporarily operated relative to the electric motors (2) engaging with the first receiving part-gearwheel (5a) via their respective output pinion (4) for eliminating all play in the direction of rotation contrary to the previous direction of rotation.

15. Toothed rack drive (14) with a play-free rotary drive (1) according to any one of claims 1 to 11, **characterised in that** the delivering gearwheel (6) formed from the first delivering part-gearwheel (6a) and the second delivering part-gearwheel (6b) axially adjacent thereto is a spur gear (15) which interlocks with a toothed rack (16).

## Revendications

1. Entraînement rotatif sans jeu (1), qui comprend une pluralité de moteurs électriques (2), qui sont disposés autour d'un axe central (3) et ont chacun un pignon de sortie (4) qui est en prise d'entraînement avec une roue dentée de réception (5) coaxiale à l'axe central (3), par laquelle l'effet d'entraînement des moteurs électriques (2) est transmis sur une roue dentée de transmission (6) coaxiale à la roue dentée de réception (5) et au niveau de laquelle l'effet d'entraînement de l'entraînement rotatif (1) peut être reçu,
dans lequel la roue dentée de transmission (6) est formée d'une première roue dentée partielle de transmission (6a) et d'une seconde roue dentée partielle de transmission (6b) adjacente axialement à celle-ci,
caractérisé
que la roue dentée de réception (5) est formée d'une première roue dentée partielle de réception (5a) et d'une seconde roue dentée partielle de réception (5b) adjacente axialement à celle-ci,
en ce que la première roue dentée partielle de réception (5a) et la première roue dentée partielle de transmission (6a) sont disposées de manières axialement distantes et solidaires en rotation sur l'axe central (3),
en ce que la seconde roue dentée partielle de réception (5b) et la seconde roue dentée partielle de transmission (6b) sont disposées de manières axialement distantes et solidaires en rotation respectivement sur une extrémité axiale (7, 8) d'une douille tubulaire (9) qui entoure librement en rotation l'axe central (3) entre la première roue dentée partielle de réception (5a) et la première roue dentée partielle de transmission (6a) au moins selon une plage d'angle prédéterminable,
en ce qu'au moins le pignon de sortie (4) d'un moteur électrique (2) est en prise d'entraînement avec la première roue dentée partielle de réception (5a) et au moins le pignon de sortie (4) d'un autre moteur électrique (2) est en prise d'entraînement avec la seconde roue dentée partielle de réception (5b), et
en ce qu'une commande (10) la pluralité de moteurs électriques (2) est comprise et conçue pour actionner chaque moteur électrique (2) étant en prise par le biais de son pignon de sortie (4) avec la seconde roue dentée partielle de réception (5b) au moins temporairement par rapport aux moteurs électriques (2) étant en prise par le biais de leur pignon de sortie (4) respectif avec la première roue dentée partielle de réception (5a) pour rattraper tout jeu dans le sens de rotation contraire.

2. Entraînement rotatif sans jeu (1) selon la revendication 1, **caractérisé**
**en ce que** les moteurs électriques (2) de la pluralité de moteurs électriques (2) sont regroupés en une unité de construction (11) qui comprend également un support (12) dans lequel l'axe central (3) est monté rotatif.

3. Entraînement rotatif sans jeu (1) selon la revendication 1 ou 2, **caractérisé**
**en ce que** les moteurs électriques (2) de la pluralité de moteurs électriques (2) sont régulièrement répartis et/ou régulièrement distants et/ou disposés le long d'une circonférence de manière concentrique à l'axe central (3).

4. Entraînement rotatif sans jeu (1) selon une des revendications précédentes, **caractérisé**
**en ce que**, dans le cas d'un nombre pair de moteurs électriques (2), les pignons de sortie (4) d'une moitié des moteurs électriques (2) sont en prise d'entraînement avec la première roue dentée partielle de réception (5a) et les pignons de sortie (4) de l'autre moitié des moteurs électriques (2) sont en prise d'entraînement avec la seconde roue dentée partielle de réception (5b) et, en ce que les moteurs électriques (2), dont les pignons de sortie (4) sont en prise avec la première roue dentée partielle de réception (5a), et les moteurs électriques (2), dont les pignons de sortie (4) sont en prise avec la seconde roue dentée partielle de réception (5b) sont disposés de manière alternée dans la direction circonférentielle des première et seconde roues dentées partielles de réception (5a, 5b), et
**en ce que**, dans le cas d'un nombre impair de moteurs électriques (2), le pignon de sortie (4) d'un moteur électrique (2) est en prise d'entraînement de choix avec la première roue dentée partielle de réception (5a) ou la seconde roue dentée partielle de réception (5b), et les pignons de sortie (4) d'une moitié du nombre restant de moteurs électriques (2) sont en prise d'entraînement avec la première roue dentée partielle de réception (5a) et les pignons de sortie (4) de l'autre moitié du nombre restant de moteurs électriques (2) sont en prise d'entraînement avec la seconde roue dentée partielle de réception (5b), et en ce que les moteurs électriques (2), dont les pignons de sortie (4) sont en prise avec la première roue dentée partielle de réception (5a), et les moteurs électriques (2), dont les pignons de sortie (4) sont en prise avec la seconde roue dentée partielle de réception (5b), sont disposés dans la direction circonférentielle des premières et secondes roues dentées partielles de réception (5a, 5b) si possible de manière alternée.

5. Entraînement rotatif sans jeu (1) selon une des revendications précédentes, **caractérisé en ce que** la première roue dentée partielle de réception (5a) et la seconde roue dentée partielle de réception (5b) sont au moins approximativement identiques en termes de rayon, d'épaisseur et d'agencement, de profondeur, d'épaisseur et/ou de répartition des dents.

6. Entraînement rotatif sans jeu (1) selon une des revendications précédentes, **caractérisé en ce que** la première roue dentée partielle de transmission (6a) et la seconde roue dentée partielle de transmission (6b) sont au moins approximativement identiques en termes de rayon, d'épaisseur et d'agencement, de profondeur, d'épaisseur et/ou de répartition des dents.

7. Entraînement rotatif sans jeu (1) selon une des revendications précédentes, **caractérisé en ce que** les moteurs électriques (2) sont de construction identique et/ou sont des moteurs électriques (2) asynchrones.

8. Entraînement rotatif sans jeu (1) selon une des revendications précédentes,
**caractérisé en ce que**
le pignon de sortie (4) et la roue dentée de réception (5) forment un engrenage (13) avec une démultiplication ou une réduction préderminable.

9. Entraînement rotatif sans jeu (1) selon une des revendications précédentes, **caractérisé en ce que**,
pour l'ensemble des moteurs électriques (2), deux convertisseurs de fréquence sont compris et sont commandés différemment par la commande (10) pour rattraper tout jeu.

10. Entraînement rotatif sans jeu (1) selon une des revendications précédentes, **caractérisé**
**en ce qu'**au moins un capteur de position, d'angle ou d'orientation est compris et est couplé à la commande (10) pour la transmission de valeurs réelles, et en ce que la commande (10) est conçue pour commander les moteurs électriques (2) en fonction d'au moins une valeur réelle et d'au moins une valeur théorique déterminée ou déterminable afin de régler l'entraînement rotatif (1) sur la valeur théorique.

11. Entraînement rotatif sans jeu (1) selon une des revendications précédentes, **caractérisé en ce que**
la commande (10) est conçue pour agir sur les moteurs électriques (2) individuels de telle sorte que les moteurs électriques (2) individuels sont sollicités de manière uniforme, et/ou que le couple total de l'entraînement rotatif (1) est réparti de manière synchrone sur tous les moteurs électriques (2).

12. Procédé de fonctionnement pour un entraînement rotatif sans jeu (1) selon une des revendications précédentes,
**caractérisé en ce que**,
dans une phase de démarrage de l'entraînement rotatif (1), chaque moteur électrique (2) étant en prise par le biais de son pignon de sortie (4) avec la seconde roue dentée partielle de réception (5b) est actionné temporairement par rapport aux moteurs électriques (2) étant en prise par le biais de leur pignon de sortie (4) respectif avec la première roue dentée partielle de réception (5a) pour rattraper tout jeu dans le sens de rotation contraire, et
**en ce que**, après l'achèvement de la phase de démarrage, tous les moteurs électriques (2) présents sont actionnés de telle sorte que leurs pignons de sortie (4) tournent dans le même sens de rotation.

13. Procédé de fonctionnement pour un entraînement rotatif sans jeu (1) selon une des revendications 1 à 11,
**caractérisé en ce que**,
dans le cas d'une inversion du sens de rotation de l'entraînement rotatif (1) après l'arrêt de tous les moteurs électriques (2) à partir d'un fonctionnement dans un sens de rotation dans une phase de démarrage de l'entraînement rotatif (1) pour faire fonctionner les moteurs électriques (2) pour le nouveau sens de rotation contraire, chaque moteur électrique (2) étant en prise par le biais de son pignon de sortie (4) avec la seconde roue dentée partielle de réception (5b) est actionné temporairement par rapport aux moteurs électriques (2) étant en prise par le biais de leur pignon de sortie (4) respectif avec la première roue dentée partielle de réception (5a) pour rattraper tout jeu dans le sens de rotation contraire au nouveau sens de rotation, et
**en ce que**, après l'achèvement de la phase de démarrage, tous les moteurs électriques (2) présents sont actionnés de telle sorte que leurs pignons de sortie (4) tournent dans le même sens de rotation.

14. Procédé de fonctionnement pour un entraînement rotatif sans jeu (1) selon une des revendications 1 à 11,
**caractérisé en ce que**,
dans le cas d'un arrêt ou d'une inversion du sens de rotation de l'entraînement rotatif (1) avant l'arrêt de tous les moteurs électriques (2) à partir d'un fonctionnement dans un sens de rotation, chaque moteur électrique (2) étant en prise par le biais de son pignon de sortie (4) avec la seconde roue dentée partielle de réception (5b) est actionné temporairement par rapport aux moteurs électriques (2) étant en prise par le biais de leur pignon de sortie (4) respectif avec la première roue dentée partielle de réception (5a) pour rattraper tout jeu dans le sens de rotation contraire au sens de rotation précédent.

15. Entraînement de crémaillère (14) comportant un entraînement rotatif sans jeu (1) selon une des revendications 1 à 11, **caractérisé en ce que** la roue dentée de transmission (6) formée de la première roue dentée partielle de transmission (6a) et de la seconde roue dentée partielle de transmission (6b) adjacente axialement à celle-ci est une roue cylindrique (15) qui s'engrène avec une crémaillère (16).
